# EUROPÄISCHE PATENTSCHRIFT

(11) **EP 1 148 399 B1**
(45) Veröffentlichungstag und Bekanntmachung des Hinweises auf die Patenterteilung: **24.11.2004**
(21) Anmeldenummer: 01108352.4
(22) Anmeldetag: 03.04.2001
(51) Int. Cl.: G05B 19/042, G05B 19/401, G05B 19/418

(54) **Verfahren zur automatischen Vergabe von Adressen an die Teilnehmer eines Bussystems**
Method for automatic addressing the components of a bus system
Méthode pour l'adressage automatique des composants d'un système de bus

(30) Priorität: 18.04.2000 EP 00108429; 20.10.2000 DE 10052044
(43) Veröffentlichungstag der Anmeldung: 24.10.2001
(73) Patentinhaber: ELMOS Semiconductor AG, 44227 Dortmund (DE)
(72) Erfinder: Hinrichs, Knut, 25348 Glückstad (DE); Müsch, Erhard, 59638 Werne (DE)
(74) Vertreter: Hilleringmann, Jochen, Dipl.-Ing.

(56) Entgegenhaltungen:
- EP-A- 0 629 934
- EP-A- 0 980 033
- US-A- 5 648 917
- US-A- 5 769 527
- US-A- 5 974 855
- HONEYWELL INC.: "BUILDING MANAGEMENT SYSTEMS FUNDAMENTALS" SECTION OF ENGINEERING MANUAL OF AUTOMATIC CONTROL 77-1100, 1988, XP002145456 USA
- BELIMO: "LM SERIES DIRECT COUPLED ACTUATOR" LM DOCUMENTATION, März 1999 (1999-03), XP002145457 USA

## Beschreibung

Die Erfindung betrifft ein Verfahren zur automatischen Vergabe von Adressen in einem Bussystem mit einem Ein- oder Mehrdrahtbus, mehreren mit dem Bus verbundenen Teilnehmern und einer ebenfalls mit dem Bus verbundenen Steuereinheit zum Ausgeben von Steuersignalen an die Teilnehmer, wobei jeder Teilnehmer ein Stellglied und eine Stellantriebsvorrichtung zum Verstellen des Stellgliedes entlang eines durch zwei Endpositionen definierten Verstellweges aufweist.

Um den Verdrahtungsaufwand beispielsweise im Kfz zu minimieren, geht man dazu über, die Steuersignale zum Ansteuern von Stellgliedern über einen Bus zu versenden, an dem neben einer Steuereinheit auch die Ansteuereinheiten für die Stellantriebsvorrichtungen der einzelnen Teilnehmer angeschlossen sind. Zu einem Bussystem zusammengefasst sind beispielsweise die Stellantriebsvorrichtungen einer Fahrzeug-Klimaanlage, der Fensterheber oder der vorderen Fahrzeugsitze. Damit die Steuereinheit selektiv ein oder mehrere Stellantriebe ansteuern kann, sind diesen Adressen zugeordnet. Bisher werden den Teilnehmern ihre Adressen durch Programmierung eingespeichert. Während dieses Procedere bei der Fertigung eines Fahrzeuges noch relativ unproblematisch ist, erfordert dies dann, wenn der gesamte Teilnehmer, das heißt die Stellantriebsvorrichtung mit Ansteuerung, beispielsweise in einer Werkstatt ausgetauscht wird, insoweit einen erhöhten Aufwand, als nunmehr die Werkstatt mit einem entsprechenden Programmiergerät ausgestattet sein muss.

Der Erfindung liegt die Aufgabe zugrunde, die Adressvergabe in einem Bussystem mit einer Steuereinheit und mehreren Teilnehmern mit Stellantriebsvorrichtungen und hierfür erforderlichen Ansteuerungsvorrichtungen zu vereinfachen.

Zur Lösung wird mit der Erfindung ein Verfahren der eingangs genannten Art vorgeschlagen, das die folgenden Schritte aufweist:
- in der Steuereinheit werden Betriebsdatensätze, die beim Verstellen der Stellglieder von der einen in die andere Endposition zu erwartende Betriebsparameter der Stellantriebsvorrichtungen der Teilnehmer beschreiben, wobei diese Sollbetriebsparameter für jede Stellantriebsvorrichtung unterschiedlich sind,
und diesen unterschiedlichen Sollbetriebsparametern zugeordnete ebenfalls unterschiedliche Adressdaten gespeichert,
- die Steuereinheit veranlasst die Stellantriebsvorrichtungen der Teilnehmer, die diesen zugeordneten Stellglieder in die eine Endposition zu überführen,
- die Steuereinheit veranlasst danach die Stellantriebsvorrichtungen der Teilnehmer, die diesen zugeordneten Stellglieder in die andere Endposition zu überführen,
- beim Überführen der Stellglieder der Teilnehmer aus der einen in die andere Endposition werden die Istbetriebsparameter der Stellantriebsvorrichtungen ermittelt,
- die Steuereinheit gibt an alle Teilnehmer die Sollbetriebsparameter und die diesen zugeordneten Adressdaten aus,
- jeder Teilnehmer vergleicht die Istbetriebsparameter mit den von der Steuereinheit übermittelten Sollbetriebsparametern und übernimmt als seine Adresse im Bussystem diejenigen Adressdaten, die zu denjenigen Sollbetriebsparametern gehören, denen die Istbetriebsparameter seiner Stellantriebsvorrichtung entsprechen.

Die Erfindung macht sich den Umstand zunutze, die Adresse in Abhängigkeit von den Betriebsparametern der Stellantriebsvorrichtungen zu vergeben, die sich einstellen, wenn die Stellantriebsvorrichtungen die ihnen zugeordneten Stellgliedern von der einen Endposition in die andere Endposition verstellen. Die zu erwartenden Sollbetriebsparameter sind unter Berücksichtigung der Gegebenheiten und der Fertigungstoleranzen ermittelt worden und zusammen mit ihnen zugeordneten Adressen in der Steuereinheit abgespeichert. Bei einer alternativen Variante der Erfindung sind sämtliche zu erwartenden Sollbetriebsparameter mit den ihnen zugeordneten Adressen in jedem Teilnehmer abgespeichert.

Anhand der sich beim Verstellen der Stellglieder aus der einen Endposition in die andere Endposition ergebenden Istbetriebsparameter kann nun jeder Teilnehmer individualisiert werden, in dem durch Vergleich der Sollbetriebsparameter mit den Istbetriebsparametern ermittelt wird, innerhalb welcher Sollbetriebsparameter die Istbetriebsparameter der Teilnehmer liegen. Damit kann nun seitens der Steuereinheit jedem Teilnehmer eine Adresse zugeordnet werden, bzw. jeder Teilnehmer vergibt sich selbst eine Adresse.

Besonders einsichtig wird das erfindungsgemäße Verfahren, wenn man als Betriebsparameter den Verstellweg definiert, entlang dessen sich das von einer Stellantriebsvorrichtung bewegte Stellglied verstellen lässt. Werden außer den Stellwegen keinerlei andere Größen herangezogen, um die Betriebsparameter zu definieren, so ist es für eine eindeutige Vergabe der Adressen erforderlich, dass die Stellwege der Teilnehmer unterschiedlich sind. Unterschiedlich müssen in diesem Fall auch die Verstellwegbereiche (Sollbetriebsparameter) sein, die, wie für diesen Fall angenommen, in der Steuereinheit zusammen mit den ihnen zugeordneten Adressen abgespeichert sind. Auf ein zentrales Kommando der Steuereinheit hin werden die Stellglieder sämtlicher Teilnehmer in die eine Endposition verfahren. Auf einen weiteren zentralen Befehl der Steuereinheit hin werden dann sämtliche Stellglieder in die andere Endposition verfahren. Dabei wird von den Teilnehmern der Istverstellweg ermittelt. Dies kann beispielsweise durch ein Rückmeldepotentiometer, wie es beispielsweise bei einer Stellantriebsvorrichtung mit Lageregelung der Fall ist, oder durch das Zählen der Schaltschritte bei einem Schaltmotor, erfolgen. In jedem Fall sind in den Teilnehmern nach dem Verfahren ihrer Stellglieder aus der einen Endposition in die andere Endposition die Istverstellwege abgespeichert.

Nunmehr sendet die Steuereinheit Datenwortpaare aus. Diese Datenwortpaare bestehen einerseits aus Daten, die die sich unter Berücksichtigung von Toleranzen ergebenden Sollverstellwegbereiche der einzelnen Stellglieder repräsentieren, und andererseits aus Adressdaten. Die einzelnen Teilnehmer überprüfen nun, in welchen der Sollverstellwegbereiche die zuvor ermittelten Istverstellwegbereiche ihrer Stellglieder fallen. Sie übernehmen jeweils diejenigen Adressdaten, die denjenigen Sollverstellwegbereichen zugeordnet sind, innerhalb derer die Istverstellwege ihrer Verstellglieder liegen. Auf diese Weise erhält also jeder Teilnehmer eine eindeutige Adresse.

Das zuvor beschriebene Verfahren, als Betriebsparameter die Verstellwege der einzelnen Stellglieder zu verwenden, ist überall dort anwendbar, wo die Verstellwege der Stellglieder der Teilnehmer eines Bussystems auch unter Berücksichtigung von Toleranzen noch ausreichend unterschiedlich sind, so dass anhand der Istverstellwege eine eindeutige Zuordnung der Adressen zu den Teilnehmern erfolgen kann. Es existieren aber auch Bussysteme, bei denen die Stellglieder von zwei oder mehreren Teilnehmern gleiche bzw. im Wesentlichen gleiche Verstellwege aufweisen. Als Beispiel für derartige Bussysteme seien hier die Stellantriebsvorrichtungen für die Luftverteilungsklappen und das Wärme- und Kältefluid eines Wärme- und Kältetauschers einer Fahrzeugklimaanlage genannt, bei der sich fahrer- und beifahrerseitig unterschiedliche Soll- .temperaturen vorgeben lassen (sogenannte Links/Rechts-Klimaanlagensysteme). Diese Systeme weisen einen "symmetrischen" Aufbau auf, indem jede Komponente doppelt, nämlich einmal für die Fahrerseite und einmal für die Beifahrerseite, vorhanden ist. In einem solchen Bussystem existieren also stets zwei Teilnehmer, deren Stellglieder (selbstverständlich unter Berücksichtigung von Fertigungs- und Montagetoleranzen) gleiche Verstellwege zwischen ihren beiden Endpositionen zurücklegen können.

Eine erste Möglichkeit, auch in einem solchen System die Adressenvergabe nach dem erfindungsgemäßen Verfahren ablaufen zu lassen, besteht darin, die paarweise gleich großen Verstellwege konstruktiv bedingt voneinander verschieden zu machen. Dies ist möglich, ohne dass die beiden Teilsysteme deshalb, für die Insassen des Fahrzeuges spürbar, unterschiedlich reagieren bzw. arbeiten.

Eine weitere Möglichkeit ist darin zu sehen, die beiden Teilnehmer jedes Paares von Teilnehmern mit Stellantriebsvorrichtungen, deren Stellglieder den gleichen Verstellweg aufweisen, unterschiedlich mit der Betriebsspannung zu polen. Bei der Betriebsspannung handelt es sich um eine Gleichspannung, so dass die unterschiedliche Polung dazu führt, dass bei gleicher Ansteuerung dieser beiden Teilnehmer ihre Stellglieder sich in entgegengesetzter Richtung verstellen würden. Durch Zwischenschaltung einer Dioden-Vollbrücke zwischen das Gleichspannungs-Versorgungsnetz und die Stellantriebsvorrichtungen erreicht man, dass die an den Stellantriebsvorrichtungen anliegende Betriebsspannung bei sämtlichen Stellantriebsvorrichtungen identische Polung aufweist. Indem eine der beiden Eingangsklemmen der Dioden-Vollbrücke abgegriffen wird, kann die Polung des Teilnehmers mit dem Gleichspannungs-Versorgungsnetz detektiert werden. Neben den Daten für die Sollverstellwegbereiche sind dann als Betriebsparameter ferner die Art und Weise der Polung als Sollbetriebsparameter gespeichert. Diesen Datensätzen zugeordnet sind dann wiederum die Adressdaten, so dass nun auch trotz gleicher Verstellwege zwischen zwei Teilnehmer bzw. zwei Stellantriebsvorrichtungen mit gleichem Verstellweg unterschieden werden kann, womit es wieder zu einer eindeutigen Adressenvergabe kommen kann.

Neben der Länge der Verstellwege der Stellglieder und/oder der Polung der Stellantriebsvorrichtungen mit dem Gleichspannungs-Versorgungsnetz können die Betriebsparameter zusätzlich und/oder alternativ auch die Größe und/oder den Zeitverlauf der beim Verstellen aus der einen in die andere Endposition durch die Stellantriebsvorrichtungen fließenden Ströme repräsentieren. Insbesondere der Stromverlauf beim Erreichen der Endpositionen kann herangezogen werden, um bei einem System, bei dem die Stellglieder der Teilnehmer paarweise nahezu identische Verstellwege aufweisen, dennoch eine Unterscheidung zwischen den beiden Teilnehmern jedes Paares zu bewirken. Dies ist wiederum insbesondere bei einem "symmetrisch" aufgebauten System mit Klappen verstellenden Stellantrieben, wie es bei einer Fahrzeug-Klimaanlage mit fahrer- und beifahrerseitiger Temperaturvorgabe anzutreffen ist, möglich. Die Luftverteilungs- und Temperaturmischklappen eines solchen Systems sind mit einer Dichtung versehen, um in der einen Endposition (ZU-Position) im Wesentlichen dicht zu verschließen. In dieser Endposition stellt sich ein vergleichsweise "weicher" Anschlag ein, während der andere Anschlag demgegenüber "härter" ist. Werden also die beiden zueinander symmetrischen Klappen, die von den Stellantriebsvorrichtungen der beiden Teilnehmer eines Paares verstellt werden, von der einen in die andere Endposition verfahren, so stellt sich bei im Wesentlichen gleichem Verstellweg bei der einen Klappe gegen Ende des Verstellweges ein anderer Stromverlauf ein, als bei der anderen. Dies kann dann bei der späteren Adressvergabe wiederum zur Unterscheidung der beiden Teilnehmer, deren zugehörige Klappen im Wesentlichen den gleichen Verstellweg zurücklegen, benutzt werden.

Ebenso kann auch die Größe des Stroms für die Unterscheidung zweier Teilnehmer herangezogen werden, deren Stellglieder im Wesentlichen den gleichen Verstellweg zurücklegen. Dies wird beispielsweise überall dort ausgenutzt; wo das Stellglied durch eine mechanische Federkraft in die eine von zwei Endpositionen vorgespannt ist. Bei der Ansteuerung von der einen in die andere Endposition arbeitet also die eine von zwei symmetrisch angeordneten Klappen gegen die Federkraft, während die Bewegung der anderen Klappe von der Federkraft unterstützt ist.

Die zuvor beschriebenen Möglichkeiten der Unterscheidung zweier Teilnehmer eines Bussystems anhand der Größe der Stromaufnahme und des Verlaufs des Stroms ist überall dort einsetzbar, wo die mechanische Verbindung zwischen einem Stellglied und der diesem zugeordneten Stellantriebsvorrichtung symmetrisch ist. Bezogen auf die Stellglieder befinden sich also die Stellantriebsvorrichtungen auf unterschiedlichen Seiten der Stellglieder. So lange dies gewährleistet ist, wie beispielsweise bei dem Luftzufuhr-Kanalsystem einer Links/Rechts-Klimaanlage für ein Fahrzeug, sind hier Möglichkeiten gegeben, trotz paarweise im Wesentlichen gleich großer Verstellwege der Stellglieder dennoch eine Unterscheidung der Teilnehmer anhand der Betriebsparameter zu ermöglichen. Anders sieht es hingegen bei der paarweise vertauschten Polung der Stellantriebsvorrichtungen der Teilnehmer eines Bussystems aus. Hier ist ein "symmetrischer" Aufbau der Kopplung zwischen Stellantriebsvorrichtungen und Stellgliedern nicht erforderlich.

Die Erfindung wird nachfolgend unter Bezugnahme auf die Zeichnung näher erläutert. Im einzelnen zeigen:

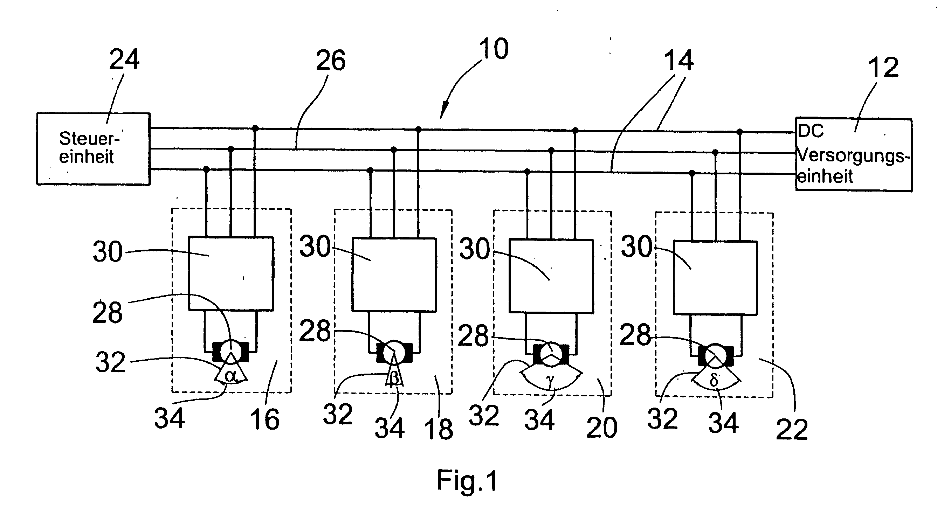

- Fig. 1: ein Bussystem mit Steuereinheit und Spannungsversorgung sowie mehreren Teilnehmern mit jeweils einer Stellantriebsvorrichtung für ein Stellglied und einer Ansteuerungselektronik für die Stellantriebsvorrichtung, wobei die Stellglieder sich entlang unterschiedlich langer Verstellwege zwischen zwei Endpositionen verfahren lassen, und

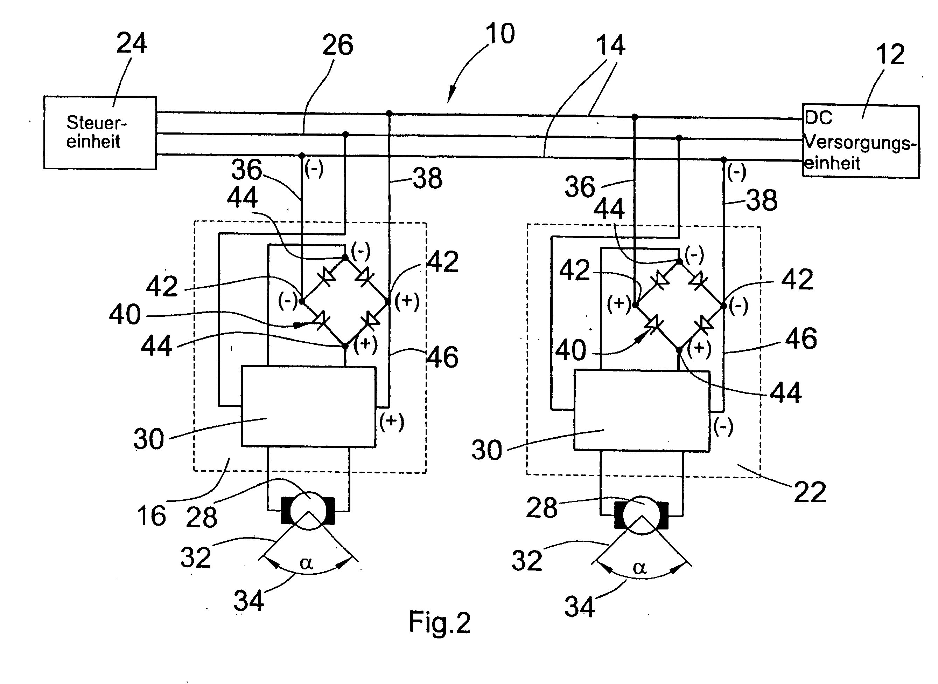

- Fig. 2: ein Bussystem mit Steuereinheit und Versorgungsspannung sowie mehreren Teilnehmern, die jeweils über eine Stellantriebsvorrichtung mit Ansteuerungselektronik und einem Stellglied verfügen, wobei sich die Stellglieder paarweise entlang im Wesentlichen gleich langer Verstellwege zwischen zwei Endpositionen verfahren lassen.

In Fig. 1 ist ein Bussystem 10 gemäß einem ersten Ausführungsbeispiel der Erfindung gezeigt. Das Bussystem 10 verfügt über eine Gleichspannungs-Versorgungseinheit 12, die ein Spannungsnetz 14 mit Gleichspannung versorgt. Mit diesem Versorgungsnetz 14 verbunden sind mehrere Teilnehmer 16,18,20 und 22 sowie eine Steuereinheit 24. Die Steuereinheit 24 sendet auf einem Ein- oder Mehrdrahtbus 26 Steuersignale für die einzelnen Teilnehmer 16 bis 22 aus.

Jeder Teilnehmer 16 bis 22 ist mit einer Stellantriebsvorrichtung in Form eines Elektromotors 28 und einer Ansteuerungsschaltung 30 für den Elektromotor 28 versehen. Der Elektromotor 28 schwenkt in dem hier beschriebenen Beispiel ein Stellglied in Form einer Klappe 32. Ein solches Bussystem 20 ist beispielsweise bei einer Fahrzeug-Klimaanlage anzutreffen, bei der die Stellglieder die Temperaturmisch- und Luftverteilungsklappen sind.

Bei den Elektromotoren 28 handelt es sich um Schrittmotoren. Diese Schrittmotoren verstellen die Klappen 32 zwischen zwei Endpositionen. In Fig. 1 wird die eine Endposition jeder Klappe 32 als durchgezogene und die andere Endposition als gestrichelte Linie dargestellt. Die durch diese beiden Endpositionen jeweils definierten Verstellwege 34 sind unterschiedlich lang, was in Fig. 1 durch die Buchstaben α, β, γ und δ gekennzeichnet ist.

Die Ansteuerungsschaltungen 30 sämtlicher Teilnehmer 16 bis 22 sind identisch. Um diese Ansteuerungsschaltungen 30 individuell ansprechen zu können, müssen den Teilnehmern 16 bis 22 unterschiedliche Adressen zugeteilt werden. Die Adressenvergabe erfolgt automatisch, und zwar in Abhängigkeit von der Länge der Verstellwege 34 der Klappen 32 der Teilnehmer 16 bis 22. Hierzu wird wie folgt verfahren.

Aufgrund der konstruktiven Gegebenheiten des mechanischen Gesamtsystems, in dem die Teilnehmer 16 bis 22 mit ihren Klappen 30 eingebunden sind, sind die Klappenverstellwege 34 unterschiedlich lang. Unter Berücksichtigung von Toleranzen ε lassen sich somit Verstellwegbereiche definieren. Diesen Verstellwegbereichen sind Adressen zugeordnet. Die Verstellwegbereiche und die Adressen sind paarweise in der Steuereinheit 24 abgelegt.

Zu Beginn des Adressenvergabeverfahrens werden zunächst auf einen zentralen Befehl der Steuereinheit 24 hin sämtliche Teilnehmer 16 bis 22 derart angesteuert, dass ihre Elektromotoren 28 die Klappen 32 in die eine von zwei Endpositionen verfahren. Das Erreichen der Endposition wird in den Ansteuerungsschaltungen 30 oder ggf. nach Rückmeldung an die Steuereinheit 24 erkannt. Dann gibt die Steuereinheit 24 einen weiteren zentralen Befehl aus, der besagt, dass die Klappen 32 sämtlicher Teilnehmer 16 bis 22 in die andere Endposition verfahren werden sollen. Die hierbei jeweils zurückgelegten Verstellwege 34 werden messtechnisch oder auf sonstige Weise in den Teilnehmern 16 bis 22 erfasst. Wenn die Elektromotoren, wie in diesem Fall, als Schrittmotore ausgebildet sind, so können die einzelnen Schritte gezählt werden. Verfügen die Elektromotoren 28 bzw. Klappen 32 über Weggeber in Form von beispielsweise Potentiometern, so lassen sich die Spannungsschübe zwischen den beiden Endpositionen messtechnisch erfassen. Jeder Teilnehmer 16 bis 22 "weiß" also nach dem Verfahren seiner Klappe 32 aus der einen in die andere Endposition, welchen Verstellweg seine Klappe 32 zurückgelegt hat. Anschließend gibt nun die Steuereinheit 24 die in der untenstehenden Tabelle angegebenen Verstellwegbereiche und Adressen-Paare aus.

**Tabelle 1**

| Verstellwegbereich | Adresse | Teilnehmer |
|---|---|---|
| α - ε, α + ε | ADRESSE 1 | 16 |
| β - ε, β + ε | ADRESSE 2 | 18 |
| · | · | · |
| · | · | · |
| · | · | · |
| γ - ε, γ + ε | ADRESSE n-1 | 20 |
| δ - ε, δ + ε | ADRESSE n | 22 |

In der Ansteuerschaltung 30 jedes Teilnehmers 16 bis 22 kommt es nun zu einem Vergleich dahingehend, dass in jedem Teilnehmer 16 bis 22 untersucht wird, innerhalb welches Verstellwegbereiches der tatsächlich ermittelte Verstellweg der Klappe 32 liegt. Die diesem Verstellwegbereich zugeordnete Adresse wird dann vom betreffenden Teilnehmer als seine Adresse übernommen. Damit ist die Adressenvergabe abgeschlossen.

Aus Sicherheitsgründen sollte dafür Sorge getragen werden, dass auch tatsächlich jeder Teilnehmer mit einer Adresse versorgt wird. Insoweit vorteilhaft ist es also, wenn jeder Teilnehmer 16 bis 22 nach dem Übernehmen einer Adresse eine Rückmeldung an die Steuereinheit 24 ausgibt. Die Steuereinheit selbst kann dann, wenn mehr als ein Teilnehmer die Übernahme der selben Adresse rückmeldet oder wenn von mindestens einem Teilnehmer keine Rückmeldung erfolgt ist, eine Fehlermeldung ausgeben. Ebenso ist es aber auch möglich, dass diejenigen Teilnehmer, die keine Adresse haben übernehmen können, jeweils eine Fehlermeldung ausgeben.

Bei dem anhand von Fig. 1 beschriebenen ersten Ausführungsbeispiel der Erfindung ist durch die Wahl unterschiedlich großer Verstellwege 34 garantiert, dass jeder Teilnehmer 16 bis 22 individualisiert werden kann. Soll das erfindungsgemäße Verfahren aber auch bei einem Bussystem eingesetzt werden, bei dem jeweils zwei Teilnehmer über Stellglieder verfügen, deren Verstellwege im Wesentlichen gleich sind, so bedarf es einer zusätzlichen Information neben der Größe des Verstellweges, um den Teilnehmern jedes Teilnehmerpaares mit gleich großen Stellglied-Verstellwegen die Adressen eindeutig zuzuordnen. Das Ausführungsbeispiel gemäß Fig. 2 zeigt, wie man diese zusätzliche Information über die Detektion der Polung der Teilnehmer mit dem Spannungsversorgungsnetz erhalten kann.

In Fig. 2 ist ein Bussystem 10' gezeigt, bei dem der Einfachheit halber von einer Vielzahl von Teilnehmern lediglich zwei Teilnehmer gezeigt sind. Soweit die Einzelheiten des Bussystems 10' denjenigen des Bussystems 10 der Fig. 1 entsprechen, sind sie in Fig. 2 mit den gleichen Bezugszeichen versehen.

Im Unterschied zum Bussystem 10, bei dem sämtliche Teilnehmer 16 bis 22 in gleicher Weise an dem Spannungsversorgungsnetzt14 angeschlossen sind (gleiche Polung), sind bei dem Bussystem 10' der Fig. 2 die beiden Teilnehmer 16,22, deren Stellglieder in Form von Klappen 32 einen gleich langen Verstellweg 34 zurücklegen können, in unterschiedlicher Weise mit dem Spannungsversorgungsnetz 14 verbunden. So ist der Anschluss 36 des Teilnehmers 16 im Minus- bzw. Massepotential des Versorgungsnetzes 14 verbunden, während der Anschluss 36 des Teilnehmers 22 mit dem Pluspotential verbunden ist. Der Anschluss 38 des Teilnehmers 16 ist mit dem Pluspotential verbunden, während der Anschluss 38 des Teilnehmers 22 mit dem Minus- bzw. Massepotential des Versorgungsnetzes 14 verbunden ist. Damit sich nun diese unterschiedliche Polung bei gleicher Ansteuerung der Teilnehmer 16,22 durch die Steuereinheit 34 nicht in ein Verstellen der Klappen 32 der Teilnehmer 16,22 in unterschiedlichen Richtungen auswirkt, ist den Elektromotoren 28 und den Ansteuerungsschaltungen 30 jeweils ein Gleichrichter 40 vorgeschaltet, der als Vollbrücke mit Dioden oder geschalteten Transistoren ausgebildet ist, wie es in Fig. 2 gezeigt ist. An den Eingangsklemmen 42 der Gleichrichter 40 liegt die Spannung des Spannungsversorgungsnetzes 14 an, während mit den Ausgangsklemmen 44 die Ansteuerschaltungen 30 verbunden sind. Durch die Gleichrichter 40 wird also erreicht, dass die Ansteuerschaltungen 30, und damit auch die Elektromotoren 28 der beiden Teilnehmer 16,22 wiederum gleich gepolt geschaltet sind.

Durch den Abgriff 46 einer der beiden Eingangsklemmen 42 kann nun detektiert werden, in welcher Weise der Teilnehmer 16,22 mit dem Spannungsversorgungsnetz 14 verbunden ist. Damit steht über die Polung und über den Abgriff 46 ein Unterscheidungskriterium der beiden Teilnehmer 16,22 zur Verfügung, um diesen beiden Teilnehmern, deren Klappen 32 zwischen ihren beiden Endpositionen die gleichen Stellwege 34 zurücklegen, unterschiedliche Adressen vergeben zu können.

Zu Beginn der Adressenvergabe wird, was die zentrale Ansteuerung der Teilnehmer 16,22 zum Verfahren der Klappen 32 in die eine Endposition und zum Verfahren der Klappen 32 aus dieser Endposition in die andere Endposition anbelangt, in der oben beschriebenen Weise verfahren. Nach dem Verstellen der Klappen 32 aus der einen in die andere Endposition haben also die beiden Teilnehmer 16,22 für ihre Klappen 32 gleich lange bzw. im Wesentlichen gleich lange Verstellwege 34 ermittelt. Durch den Abgriff 46 "weiß" darüber hinaus jeder Teilnehmer 16,22, auf welche Weise er mit dem Spannungsversorgungsnetz 14 verbunden ist. Die Steuereinheit 24 gibt alsdann neben den - unter Berücksichtigung von Toleranzen ermittelten - Verstellwegbereichen und der Polung Adressen aus und meldet diese Datensätze den einzelnen Teilnehmern 16,22. Die Datensätze ergeben sich aus der nachfolgenden Tabelle 2.

**Tabelle 2**

| Verstellwegbereich/Polung | Adresse | Teilnehmer |
|---|---|---|
| α - ε, α + ε; (+) | ADRESSE 1 | 16 |
| · | · | · |
| · | · | · |
| · | · | · |
| α - ε, α + ε; (-) | ADRESSE n | 22 |

Jeder Teilnehmer 16,22 vergleicht wiederum den von der Steuereinheit 24 gemeldeten Verstellwegbereich und die Polung mit dem zuvor ermittelten Verstellwegbereich und seiner eigenen Polung, um dann anhand dieser Angaben eindeutig bestimmen zu können, welche Adresse ihm zugeordnet ist. Diese Adresse übernimmt der Teilnehmer 16,22 dann als seine Adresse im Bussystem 10'.

Vorstehend wurde die Erfindung anhand eines Ausführungsbeispiels eines Bussystems beschrieben, dessen Teilnehmer Stellglieder aufweisen, wobei die Busteilnehmer anhand ihrer die Funktion beschreibenden Betriebsparameter voneinander unterscheidbar sein sollten. So könnte man z.B. derartige Teilnehmer eines Bussystems anhand ihrer elektrischen Größen in dem (einzigen) Betriebszustand, in mindestens einem der Betriebszustände und/oder beim Umschalten von dem einen auf den anderen Betriebszustand voneinander unterscheidbar spezifizieren.

## Patentansprüche

1. Verfahren zur automatischen Vergabe von Adressen in einem Bussystem
- mit einem Bus, mehreren mit dem Bus verbundenen Teilnehmern und einer ebenfalls mit dem Bus verbundenen Steuereinheit zum Ausgeben von Steuersignalen an die Teilnehmer, wobei jeder Teilnehmer ein Stellglied und eine Stellantriebsvorrichtung zum Verstellen des Stellgliedes entlang eines durch zwei Endpositionen definierten Verstellweges aufweist, mit den folgenden Schritten:
- in der Steuereinheit (24) werden Betriebsdatensätze, die beim Verstellen der Stellglieder (32) von der einen in die andere Endposition zu erwartende Betriebsparameter der Stellantriebsvorrichtungen (28) der Teilnehmer (16-22) beschreiben, wobei diese Sollbetriebsparameter für jede Stellantriebsvorrichtung (28) unterschiedlich sind,
und diesen unterschiedlichen Sollbetriebsparametern zugeordnete ebenfalls unterschiedliche Adressdaten gespeichert,
- die Steuereinheit (24) veranlasst die Stellantriebsvorrichtungen (28) der Teilnehmer (16-22), die diesen zugeordneten Stellglieder (32) in die eine Endposition zu überführen,
- die Steuereinheit (24) veranlasst danach die Stellantriebsvorrichtungen (28) der Teilnehmer (16-22), die diesen zugeordneten Stellglieder (32) in die andere Endposition zu überführen,
- beim Überführen der Stellglieder (32) der Teilnehmer (16-32) aus der einen in die andere Endposition werden die Istbetriebsparameter der Stellantriebsvorrichtungen (28) ermittelt,
- die Steuereinheit (24) gibt an alle Teilnehmer (16-22) die Sollbetriebsparameter und die diesen zugeordneten Adressdaten aus,
- jeder Teilnehmer (16-22) vergleicht die Istbetriebsparameter mit den von der Steuereinheit übermittelten Sollbetriebsparametern und übernimmt als seine Adresse im Bussystem diejenigen Adressdaten, die zu denjenigen Sollbetriebsparametern gehören, denen die Istbetriebsparameter seiner Stellantriebsvorrichtung (28) entsprechen.

2. Verfahren zur automatischen Vergabe von Adressen in einem Bussystem mit einem Bus, mehreren mit dem Bus verbundenen Teilnehmern und einer ebenfalls mit dem Bus verbundenen Steuereinheit zum Ausgeben von Steuersignalen an die Teilnehmer, wobei jeder Teilnehmer ein Stellglied und eine Stellantriebsvorrichtung zum Verstellen des Stellgliedes entlang eines durch zwei Endpositionen definierten Verstellweges aufweist, mit den folgenden Schritten:
- in jedem Teilnehmer (16-22) werden für sämtliche Teilnehmer (16-22) Betriebsdatensätze,
die beim Verstellen der Stellglieder (32) von der einen in die andere Endposition zu erwartende Betriebsparameter der Stellantriebsvorrichtungen (28) der Teilnehmer (16-22) beschreiben, wobei diese Sollbetriebsparameter für jede Stellantriebsvorrichtung (28) unterschiedlich sind,
und diesen unterschiedlichen Sollbetriebsparametern zugeordnete ebenfalls unterschiedliche Adressdaten gespeichert,
- die Steuereinheit (24) veranlasst die Stellantriebsvorrichtungen (28) der Teilnehmer (16-22), die diesen zugeordneten Stellglieder (32) in die eine Endposition zu überführen,
- die Steuereinheit (24) veranlasst danach die Stellantriebsvorrichtungen (28) der Teilnehmer (16-22), die diesen zugeordneten Stellglieder (32) in die andere Endposition zu überführen,
- beim Überführen der Stellglieder (32) der Teilnehmer (16-22) aus der einen in die andere Endposition werden die Istbetriebsparameter der Stellantriebsvorrichtungen (28) ermittelt,
- jeder Teilnehmer (16-22) vergleicht die Istbetriebsparameter mit den gespeicherten Sollbetriebsparametern und übernimmt als seine Adresse im Bussystem diejenigen Adressdaten, die zu denjenigen Sollbetriebsparametern gehören, denen die Istbetriebsparameter seiner Stellantriebsvorrichtung (28) entsprechen.

3. Verfahren nach Anspruch 1 oder 2, **dadurch gekennzeichnet, dass** jeder Teilnehmer (16-22) nach dem Übernehmen von Adressdaten eine Rückmeldung an die Steuereinheit (24) ausgibt.

4. Verfahren nach Anspruch 3, **dadurch gekennzeichnet, dass** die Steuereinheit (24) eine Fehlermeldung ausgibt, wenn mehr als ein Teilnehmer (16-22) die Übernahme der selben Adressdaten rückmeldet oder wenn von mindestens einem Teilnehmer (16-22) keine Rückmeldung erfolgt ist.

5. Verfahren nach Anspruch 2, **dadurch gekennzeichnet, dass** ein Teilnehmer (16-22) dann, wenn er keine Adressdaten hat übernehmen können, eine Fehlermeldung ausgibt.

6. Verfahren nach Anspruch 2 oder 5, **dadurch gekennzeichnet, dass** jeder Teilnehmer (16-22) die von ihm übernommenen Adressdaten an die Steuereinheit (24) meldet und dass die Steuereinheit (24) eine Fehlermeldung ausgibt, wenn mehr als ein Teilnehmer (16-22) die Übernahme der selben Adressdaten rückmeldet oder wenn von mindestens einem Teilnehmer (16-22) keine Rückmeldung erfolgt ist.

7. Verfahren nach einem der Ansprüche 1 bis 6, **dadurch gekennzeichnet, dass** die Sollbetriebsparameter der Stellantriebsvorrichtungen (28) die Länge der Verstellwege (34) der Stellglieder (32) repräsentieren.

8. Verfahren nach einem der Ansprüche 1 bis 6, **dadurch gekennzeichnet, dass** die Sollbetriebsparameter der Stetlantriebsvorrichtungen (28) die Größe und/oder den Zeitverlauf der beim Verstellen aus der einen in die andere Endposition durch die Stellantriebsvorrichtungen (28) fließenden Ströme repräsentierten.

9. Verfahren nach einem der Ansprüche 1 bis 6, **dadurch gekennzeichnet, dass** die Sollbetriebsparameter die Art der Polung der Stellantriebsvorrichtung (28) mit einem Gleichspannungs-Versorgungsnetz (14) repräsentieren.

## Claims

1. A method for automatically assigning addresses in a bus system with a bus, a plurality of participating units connected to the bus and a control device for issuing control Signals to the units also coupled to the bus, where each unit comprises an actuator and an actuator driving device for displacing the actuator along a displacement path defined by two end positions, comprising the following steps:
- storing, in the control device (24), operating data sets that, upon adjustment of the actuators (32) from one end position to another end position, describe expected operation parameters of the actuator driving devices (28) of the units (16-22), these set parameters being different for each actuator driving device (28), and storing address data that are also different and are assigned to the different set parameters,
- wherein the control device (24) causes the actuator driving devices (28) of the units (16-22) to move the respective assigned actuators (32) to the one end position,
- wherein the control device (24) then causes the actuator driving devices (28) of the units (16-22) to move the respective assigned actuators (32) to the other end position,
- determining the actual operating parameters of the actuator driving devices (28) during the movement of the actuators (32) of the units (16-22) from one end position to the other end position,
- wherein the control device (24) issues the set parameters and the respective assigned address data to all units (16-22),
- wherein each unit (16-22) compares the actual operating parameters to the set operating parameters provided by the control device and accepts those address data as its address in the bus system, which belong to those set operating parameters to which the actual operating parameters of its actuator driving device (28) correspond.

2. A method for automatically assigning addresses in a bus system with a bus, a plurality of participating units connected to the bus and a control device for issuing control Signals to the units also coupled to the bus, where each unit comprises an actuator and an actuator driving device for displacing the actuator along a displacement path defined by two end positions, comprising the following steps:
- storing, in each unit (16-22), operating data sets that for all units (16-22), upon adjustment of the actuators from one end position to another end position, describe expected operation parameters of the actuator driving devices (28) of the units (16-22), these set parameters being different for each actuator driving device (28), and storing address data that are also different and are assigned to the different set parameters,
- wherein the control device (24) causes the actuator driving devices (28) of the units (16-22) to move the respective assigned actuators (32) to the one end position,
- wherein the control device (24) then causes the actuator driving devices (28) of the units (16-22) to move the respective assigned actuators (32) to the other end position,
- determining the actual operating parameters of the actuator driving devices (28) during the movement of the actuators (32) of the units (16-22) from one end position to the other end position,
- wherein each unit (16-22) compares the actual operating parameters to the set operating parameters provided by the control device and accepts those address data as its address in the bus system, which belong to those set operating parameters to which the actual operating parameters of its actuator driving device (28) correspond.

3. The method of claim 1 or 2, wherein each unit (16-22) issues an acknowledgment to the control device (24) after having accepted address data.

4. The method of claim 3, wherein the control device (24) issues an error indication if more than one unit (16-22) acknowledges the acceptance of the same address data or if at least one unit (16-22) has provided no acknowledgment.

5. The method of claim 2, wherein a unit (16-22) issues an error indication, if it could not accept any address data.

6. The method of claim 2 or 5, wherein each unit (16-22) reports the address data accepted to the control device (24), and wherein the control device (24) issues an error indication if more than one unit (16-22) acknowledges the acceptance of the same address data or if at least one unit (16-22) has provided no acknowledgment.

7. The method of one of claims 1 to 6, wherein the set operating parameters of the actuator driving devices (28) represent the length of the displacement paths (34) of the actuators (32).

8. The method of one of claims 1 to 6, wherein the set operating parameters of the actuator driving devices (28) represent the magnitude and/or the course over time of the currents flowing through the actuator driving devices (28) upon displacement from the one position to the other position.

9. The method of one of claims 1 to 6, wherein the set operating parameters represent the kind of polarization of the actuator driving device (28) with a DC supply network (14).

## Revendications

1. Procédé en vue de l'attribution automatique d'adresse dans un système de bus
- avec un bus, plusieurs abonnés reliés au bus et une unité de commande reliée également au bus en vue de la délivrance de signaux de commande aux abonnés, dans lequel chaque abonné présente un composant de réglage et un dispositif de mécanisme de réglage pour le réglage du composant de réglage le long d'un parcours de réglage défini par deux positions terminales, avec les étapes suivantes :
- dans l'unité de commande (24) se trouvent des blocs de données de fonctionnement,
qui décrivent lors du réglage du composant de réglage (32) d'une position terminale dans l'autre, les paramètres attendus des dispositifs de mécanisme de réglage (28) des abonnés (16-22), dans laquelle ces paramètres de fonctionnement prescrits sont différents pour chaque dispositif de mécanisme de réglage (28),
et mémorisent également des données d'adresse différentes associées à ces paramètres de fonctionnement prescrits,
- l'unité de commande (24) amène les dispositifs de mécanisme de commande (28) des abonnés (16-22), à transmettre les composants de réglage (32) qui leur sont associés dans une position terminale,
- l'unité de commande (24) amène ensuite les dispositifs de mécanisme de commande (28) des abonnés (16-22), à transmettre les composants de réglage (32) qui leur sont associés dans l'autre position terminale,
- lors de la transmission aux composants de réglage (32) des abonnés (16-22) à partir de l'une dans l'autre position terminale, les paramètres de fonctionnement réels des dispositifs de mécanisme de commande (28) sont recherchés,
- l'unité de commande (24) délivre à tous les abonnés (16-22) les paramètres de fonctionnement prescrits et les données d'adresse qui leur sont associées,
- chaque abonné (16-22) compare les paramètres de fonctionnement réels avec les paramètres de fonctionnement prescrits transmis par l'unité de commande et reçoit en tant que son adresse dans le système de bus ces données d'adresse, qui appartiennent à ces paramètres de fonctionnement prescrits, auxquels correspondent les paramètres de fonctionnement réels de son dispositif de mécanisme de commande (28).

2. Procédé en vue de l'attribution automatique d'adresse dans un système de bus avec un bus, plusieurs abonnés reliés au bus et une unité de commande également reliée au bus en vue de la délivrance de signaux de commande aux abonnés, dans lequel chaque abonné présente un composant de réglage et un dispositif de mécanisme de réglage en vue du réglage du composant de réglage le long d'un parcours de réglage défini par deux positions terminales, avec les étapes suivantes :
- dans chaque abonné (16-22), des blocs de données de fonctionnement, qui lors du réglage du composant de réglage (32) d'une position terminale à l'autre décrivent les paramètre de fonctionnement attendus des dispositifs de mécanisme de réglage (28) des abonnés (16-22), dans lequel ces paramètres de fonctionnement prescrits sont différents pour chaque dispositif de mécanisme de réglage (28), sont mémorisés pour tous les abonnés (16-22) et les données d'adresse également différentes associées à ces paramètres de fonctionnement prescrits différents,
- l'unité de commande amène les dispositifs de mécanisme de commande des abonnés, à transmettre les composants de réglage qui leur sont associés dans une position terminale,
- l'unité de commande amène ensuite les dispositifs de mécanisme de commande des abonnés, à transmettre les composants de réglage qui leur sont associés dans l'autre position terminale,
- lors de la transmission aux composants de réglage des abonnés à partir de l'une dans l'autre position terminale, les paramètres de fonctionnement réels des dispositifs de mécanisme de commande sont recherchés,
- chaque abonné (16-22) compare les paramètres de fonctionnement réels avec les paramètres de fonctionnement prescrits mémorisés et accepte en tant que son adresse dans le système de bus ces données d'adresse, qui font partie de ces paramètres de fonctionnement prescrits, auxquels correspondent les paramètres de fonctionnement réels de son dispositif de mécanisme de réglage (28).

3. Procédé selon la revendication 1 ou 2, **caractérisé en ce que** chaque abonné (16-22) délivre après acceptation des données d'adresse un accusé de réception à l'unité de commande (24).

4. Procédé selon la revendication 3, **caractérisé en ce que** l'unité de commande (24) délivre un message d'erreur, lorsque plus d'un abonné (16-22) accuse réception de l'acceptation des mêmes données d'adresse ou lorsqu'aucun accusé de réception ne provient d'au moins un abonné (16-22).

5. Procédé selon la revendication 2, **caractérisé en ce qu'**un abonné (16-22) délivre ensuite un message d'erreur, lorsqu'il n'a pas pu accepter les données d'adresse.

6. Procédé selon la revendication 2 ou 5, **caractérisé en ce que** chaque abonné (16-22) informe l'unité de commande (24) des données d'adresse qu'il a acceptées et **en ce que** l'unité de commande (24) délivre un message d'erreur, lorsque plus d'un abonné (16-22) accuse réception de l'acceptation des mêmes données d'adresse ou lorsqu'aucun accusé de réception ne provient d'au moins un abonné (16-22).

7. Procédé selon l'une des revendications 1 à 6, **caractérisé en ce que** les paramètres de fonctionnement prescrits des dispositifs de mécanisme de réglage (28) représentent la longueur des parcours de réglage (34) des composants de réglage (32).

8. Procédé selon l'une des revendications 1 à 6, **caractérisé en ce que** les paramètres de fonctionnement prescrits des dispositifs de mécanisme de réglage (28) représentent la grandeur et/ou le cours du temps des courants s'écoulant par l'intermédiaire des dispositifs de mécanisme de réglage (28) lors du réglage d'une position terminale dans l'autre.

9. Procédé selon l'une des revendications 1 à 6, **caractérisé en ce que** les paramètres de fonctionnement prescrits représentent la technique de la polarisation du dispositif de mécanisme de réglage (28) avec le réseau d'alimentation en tension continue (14).
